Europäisches Patentamt

European Patent Office

Office européen des brevets

(19)

(11) Publication number : **0 309 979 B1**

# EUROPEAN PATENT SPECIFICATION

(12)

(45) Date of publication of patent specification :
**11.09.91 Bulletin 91/37**

(51) Int. Cl.⁵ : **G01L 3/10**

(21) Application number : **88115860.4**

(22) Date of filing : **27.09.88**

(54) Magnetoelastic torque transducer.

(30) Priority : **28.09.87 SE 8703720**

(43) Date of publication of application :
**05.04.89 Bulletin 89/14**

(45) Publication of the grant of the patent :
**11.09.91 Bulletin 91/37**

(84) Designated Contracting States :
**DE FR GB IT SE**

(56) References cited :
**US-A- 3 538 762**
**US-A- 4 506 554**

(73) Proprietor : **ASEA BROWN BOVERI AB**
**S-721 83 Västeras (SE)**

(72) Inventor : **Sobel, Jarl**
**Siggesborgsgatan 5 D**
**S-722 26 Vasteras (SE)**

(74) Representative : **Boecker, Joachim, Dr.-Ing.**
**Rathenauplatz 2-8**
**W-6000 Frankfurt a.M. 1 (DE)**

EP 0 309 979 B1

## Description

The invention relates to a magnetoelastic torque transducer according to the precharacterising part of Claim 1.

Such a torque transducer enables contactless measurement of torsional moment on a rotating or stationary shaft. The transducer is of magnetoelastic type and designed as a symmetrically rotating body. The transducer is particularly useful in applications where the measuring zones on the shaft have a temperature gradient, i.e. where a thermal flux passes through the shaft in the longitudinal direction therof.

Magnetoelastic torque transducers rotating symmetrically and similar in design to the invention described below are known through a number of patent specifications and articles, some of which will be commented upon below.

The common measuring principle and common feature of these known torque transducer is that zones have been created in the magnetoelastic material with anisotropy or magnetic orientation substantially coinciding with the compressive or tensile stresses appearing in a shaft, at ±45° in relation to a generatrix to the shaft, when this is caused by the load to twist. In this way the reluctance in a zone whose direction of magnetization coincides with the tensile stress will be reduced and the reluctance in zones coinciding with the compressive stress will increase, thus causing a corresponding increase or decrease in magnetic flux density through the zones. This is applicable in the case of positive magnetostriction.

By measuring the difference in reluctance between two zones in which the anisotropy in one zone is directed along the direction of pull (extension) and that in the other zone along the direction of pressure (compression), a measurement of the torque is obtained which has little sensitivity to axial forces or flexural stresses.

The difference in reluctance between the zones is usually measured by creating an alternating field of magnetic force H via a primary coil concentric to the shaft, directed along the shaft and having equal amplitude in both zones. The difference in the field of magnetic flux density B between the zones is then measured by two identical secondary coils, one above each zone. The easiest way to do this is by inversely connecting the secondary coils in such a way that the voltages induced in each coil are subtracted from each other. Phase-sensitive rectification of the secondary signal obtained in this manner also enables torques of different direction to be distinguished.

The difference between the torque transducers mentioned below, besides the choice of magnetostrictive material, lies in the different methods of creating the required anisotropy.

According to Russian patent SU 667836 the anisotropy is created by cutting slits in the surface of the shaft.

Russian patent SU 838448 describes a transducer in which an attempt is made to increase sensitivity instead by producing the slits by roll-embossing this pattern in the surface.

US-A-4506554 covers a transducer in which the anisotropy is achieved by using a sleeve with slit cut in the main stress directions.

A very similar design is also described by J.Yamasaki, K.Mohri et al. in IEEE Trans Magn Vol Mag-22 No.5 p.403 (Sept. 1986). Here a 100 micrometer thick "sleeve" has been produced, with through-"slits" on a stainless steel shaft by spraying the shaft with drops of a molten magnetoelastic alloy through a mask. The technique used consists of allowing a strong electrical discharge to pass through a conductor in the relevant material, whereupon the core is vaporized and the conductor explodes.

An article by K.Harada, I.Sasada et al in IEEE Trans Magn Vol Mag 18, No.6, p.1767 describes a solution comprising gluing a stress-relieved foil of amorphous magneto-strictive material onto a shaft which has been prestressed with a certain torque. When the glue has dried, the prestressing will disappear and produce an anisotropy since the foil will now be prestressed.

An article by I.Sasada, A.Hiroike, and K.Harada, published in IEEE Trans Magn Vol Mag-20, No.5, p.951, describes how anisotropy can instead be created by gluing strips of amorphous magnetoelastic material onto a magnetic or non-magnetic transducer shaft in its principle stress directions.

Torque transducers of this type generally offer good measuring qualities for the majority of applications. However, in a few special applications problems of measuring accuracy may occur. If a thermal flux passes through the shaft, i.e. if there is a temperature gradient in the shaft, this will affect the measurement. It is known from the literature that the permeability of magnetic material is extremely temperature-dependent. If, therefore, a temperature-difference exists across the measuring zones of the shaft, the measured signal will not correctly indicate the torque, due to the varying permeability within the measured zone. Applications in which these problems may occur can be found in many areas. Temperature differences of several hundred degrees may prevail, for instance, between a combustion engine and its gearbox or coupling. A thermal flux will therefore pass through the shaft connecting these parts and the measuring accuracy will thus be detrimentally affected when measuring the torque transmitted by the shaft. An electric motor may be located in a well heated machine room and, due to high load, may reach the maximum temperature permitted for the motor. The machine being driven by the motor may be located outdoors and connected to the motor by a shaft passing through a wall resulting in the build-up of temperature gradient in the shaft which may cause problems in the measuring accuracy.

There seems to exist no information in the available literature, concerning the temperature-dependence of the permeability for the materials used in connection with magnetoelastic torque transducers of this type, i.e. both annealed and cold-rolled silicon steel. Some idea of expected magnitudes can, however, be deduced from a book "Ferro-magnetism" by Bozorth, published in 1951 by D. van Nostrand Company Inc., Princetown, New Jersey. This includes measurements applicable to pure iron which has been stress-relieved to 800°C.

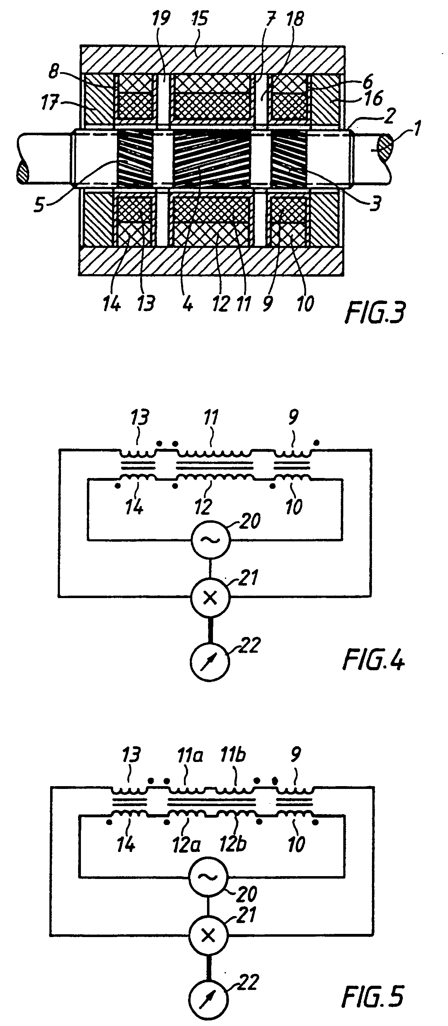

From this book, appendix 1, Fig. 3-8, it can be seen that both, the initial permeability $\mu_o$ and the maximum permeability $\mu_m$ increase as the temperature increases. It can be seen from the figures that $\mu_m$ increases by a factor of two at 200°C, i.e. that

$$\mu = \mu_{T-o}°C \ (1 + T/200)$$

or, in other words, that $\mu$ increases by 0.5%/°C.

The magnetostrictive permeability alteration due to the tensile stress in a stress-relieved strip of the material used in the type of torque transducer under consideration has been measured and is at least 1%/MPa.

For a moderately loaded transducer where the material is loaded to 20 MPa, therefore, maximal loading would give the same permeability alteration as a temperature alteration of 40°C. This would thus give a neutral drift of 1/40 = 2.5% of max. signal per °C temperature difference between the measured zones.

The above estimate is extremely rough and assumes, for instance, that the magnetostrictive permeability alteration for compressive stresses is substantially the same as that measured for tensile stresses. However, the estimated value should be representative for the maximum neutral drift caused by temperature gradients. This also shows that in applications where temperature gradients are likely in the shaft measuring zones, and where measuring must be very accurate, measures must be taken to eliminate or greatly reduce the effect of a heat flux passing through the shaft.

The invention aims at a magnetoelastic torque transducer of the above-mentioned kind which exhibits, in a reliable manner, an extremely reduced sensitivity to temperature gradients along the measuring zone in the shaft of the transducer.

To achieve this aim the invention suggests a magnetoelastic torque transducer according to the introductory part of Claim 1, which is characterized by the features of the characterizing part of Claim 1.

Further developments of the invention are characterized by the features of the additional claims.

The invention will now be described in greater detail with reference to the accompanying drawings showing — by way of example — in

Figures 1A-1D    how a temperature gradient in a shaft/measuring sleeve affects the zero signal of a magnetoelastic torque transducer designed in accordance with prior art technology. The necessary anisotropy in the measuring zones is indicated here by slanting lines,

Figures 2A-2D    the principle of a magnetoelastic torque transducer according to the invention, which radically reduces the influence of a temperature gradient within the measuring zones of a shaft/measuring sleeve,

Figure 3    a preferred embodiment of a transducer according to the invention,

Figure 4    the principle of a circuit for supplying the excitation coils and measuring the signals from the measuring coils,

Figure 5    an alternative embodiment of a circuit for supplying the excitation coils and measuring the signals from the measuring coils.

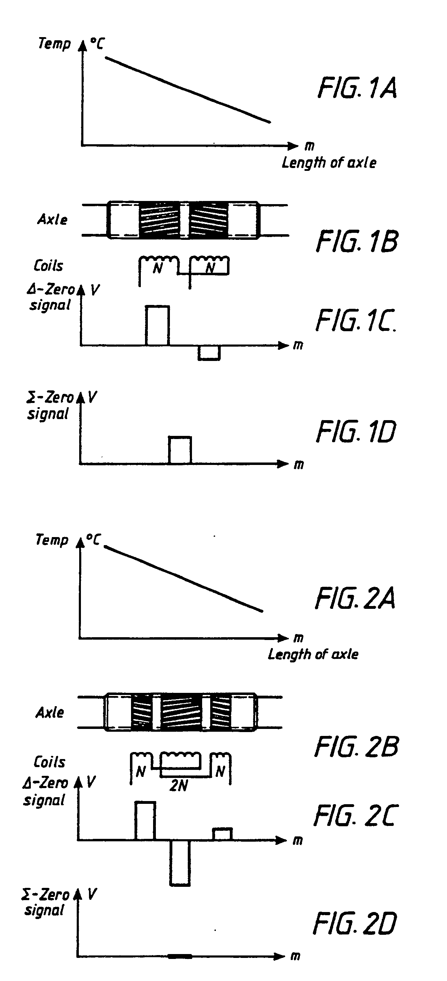

First, with the aid of Figures 1A-1D, it will be described how a temperature gradient influences the zero signal, i.e. the output signal of the transducer when the shaft is not transmitting any torque. If the shaft is loaded, of course, the zero signal caused by a temperature gradient will be added to the relevant torque signal.

If an unloaded shaft according to Figure 1B is subjected to a temperature gradient according to Figure 1A, due to the different permeabilities prevailing in the core iron of each measuring coil, the measuring coils will emit a $\Delta$-zero signal in accordance with Figure 1C, resulting in a $\Sigma$-zero signal in accordance with Figure 1D. As is evident from Figure 1B, the excitation coils of the transducer have been omitted.

A torque transducer according to the invention is shown in Figure 2B. The shaft here has three parallel annular zones provided with such anisotropy that the magnetic field in the shaft is deflected by an angle $\alpha$ relative to a generatrix to the shaft in the outer zones (3,5 in Figure 3) and is deflected by an angle $-\alpha$ to a generatrix to the shaft in the middle zone (4). The axial extension of each of the two outer zones is substantially half that of the middle zone. The angle $\alpha$ should be at least 45° in order to obtain good sensitivity in the transducer.

3

The excitation coils, not shown in Figure 2B, are connected in series in the normal way.

The measuring coils for the two outer zones are provided with an equal number of turns N and the coil for the middle zone has a number of turns substantially corresponding to the sum of the two outer coils, i.e. 2N. As can be seen in Figure 2B, the outer coils are series-connected and the measuring coil of the central zone is inversely connected in relation to the two others.

As revealed in Figures 2C and 2D, the resultant zero signal from a temperature gradient will be practically zero. A torque transducer of the type described can therefore be used for applications where a thermal flux passes through the shaft. In the case of stationary thermal flux, i.e. a linear temperature gradient, the influence of the thermal flux on the permeability, and thus on the measured signal, can thus be fully compensated and sensitivity to other more complicated gradients is greatly reduced.

Figure 3 shows an embodiment of a magnetoelastic torque transducer according to the invention. The anisotropy is achieved here in the same way as in the transducer described in US-A-4506554.

A measuring sleeve 2 is secured about a shaft 1 in such a manner that it is unable to twist relative to the shaft. The sleeve is provided with three annular zones 3, 4, 5, the axial length of zones 3 and 5 being equal and slits being arranged in the same direction at an inclination of substantially 45° in relation to a generatrix to the sleeve. The axial length of measuring zone 4 is twice that of the other two zones 3,5 and this zone is provided with slits having the same pitch but directed at 90° to the slits in zones 3 and 5. Each of the measuring zones 3, 4, 5 is surrounding by stationary bobbins 6, 7 and 8, arranged concentric with the shaft, and by coils 9, 10, and 11, 12 ; 13, 4, respectively. Coils 10, 12 and 14 are provided for being fed with alternating current to excite the magnetic flux, these coils being connected in series. The coils 9, 11 and 13 are used to sense a torque applied on the shaft. Coil 11 is inverse-connected to the two outer coils. The electrical connection can be seen in Figure 4. An iron core 15 in the form of a rotary body with U-shaped generating surface surrounds the coils, the air-gap towards the shaft at the two annular outer parts 16, 17 or the iron core.

The spaces 18 and 19 may be filled by circular discs of magnetic material, giving the excitation flux somewhat better distribution than if these spaces are filled with discs of insulating material. In this version the side walls of the bobbins may be made so wide that the bobbins can be fitted close together, or all coils can be wound onto one bobbin with turned openings corresponding to the three separate bobbins shown in the figure. In such case it is advisable for the excitation coil to be wound evenly over all the measuring zones.

Figure 4 shows that coils 10, 12 and 14 are connected in series and are supplied from an alternating current source 20, while the coils 9, 11 and 13 are connected so that coil 11 is inverse-connected to the other two and that the total signal is rectified in the controlled rectifier 21 and presented on an instrument 22.

According to Figure 4, the magnetic flux is directed in one and the same direction because the excitation coils are connected in series. It is of course quite possible for the magnetic field to be directed in different directions in each half of the transducer. This method of connection can be seen in Figure 5, i.e. with the excitation coils 10, 12a, 12b and 14 wound and connected to obtain different magnetization directions. The central measuring coil must then of course be divided in order to obtain the desired inverse-connection. Each of the two central coils are wound with half as many turns as the central coils described earlier.

Since there will always be a certain leakage flux at the ends of such a construction, the flux at the central measuring zone will be slightly stronger than at the two outer zones if the central excitation coil has twice as many turns as the outer coils. To ensure minimum influence from the temperature gradient, therefore, the number of turns on either the central excitation coil or the central measuring coil may be made slightly less than twice those of the two outer coils.

## Claims

1. Magnetoelastic torque transducer comprising a shaft, stationary coils concentric with the shaft in order to excite the magnetic field of the the transducer through alternating current, and stationary coils concentric with the shaft to measure the external torsional moment applied on the shaft, and a magnetic casing also located concentrically with the shaft, characterized in that the shaft has three parallel annular zones (3, 4, 5) provided with such anisotropy that the magnetic field in the shaft is deflected by an angle α of preferably 45° to a generatrix to the shaft in the two outer zones (3, 5) and is deflected by an angle α of preferably −45° to a generatrix to the shaft in the central zone, the axial extension of both outer zones being substantially half that of the intermediate zone, that the excitation is provided by three separate coils, connected in series, each coil being located outside an annular zone and the outer excitation coils (10, 14) being wound with substantially half as many turns as the central excitation coil, and that concentric with each excitation coil a measuring coil is provided, the outer measuring coils (9, 13) being wound with substantially half as many turns as the central measuring coil (11), the latter being inversely connected to the outer measuring coils.

2. Magnetoelastic torque transducer according to Claim 1, **characterized** in that the three excitation coils are replaced by one excitation coil wound uniformly across all three zones.

3. Magnetoelastic torque transducer according to Claim 1, **characterized** in that the central excitation coil is replaced by two identical excitation coils (12a, 12b), each having half as many turns as the central excitation coil and connected together so that the magnetic flux in each is directed in the opposite direction to that in the other, and that the outer excitation coils are connected so that their magnetic fluxes cooperate with the magnetic flux of the adjacent, central excitation coil, and that the central measuring coil is also replaced by two identical measuring coils (11a, 11b), each having half as many turns as the central measuring coil, each being arranged to be inversely connected to the adjacent outer measuring coil, the measuring coils thus being inversely connected so that the resultant torque can be measured.

4. Magnetoelastic torque transducer according to any of the preceding claims, **characterized** in that the number of coil turns on the central excitation coil is less than double the number of turns on the outer excitation coils.

5. Magnetoelastic torque transducer according to any of the preceding claims, **characterized** in that the number of coil turns on the central measuring coil is less than double the number of turns on the outer measuring coils.

6. Magnetoelastic torque transducer according to any of the preceding claims, **characterized** in that the transducer is arranged with circular discs of magnetic material in the space between the coils.

**Patentansprüche**

1. Magnetoelastischer Drehmomentmeßgeber mit einer Welle, mit konzentrisch zur Welle angeordneten stationären Spulen zur Erregung des magnetischen Feldes dem Meßgebers mittels Wechselstrom, mit konzentrisch zur Welle angeordneten stationären Spulen zur Messung des an der Welle angreifenden äußeren Torsionsmomentes und mit einem magnetischen Gehäuse, welches ebenfalls konzentrisch zur Welle angeordnet ist, **dadurch gekennzeichnet**, daß die Welle drei parallele ringförmige Zonen (3, 4, 5) hat, die eine solche Anisotropie haben, daß das magnetische Feld in der Welle um einen Winkel ($\alpha$) von vorzugsweise 45° zu einer Erzeugenden der Welle in den beiden äußeren Zonen abgelenkt wird und um einen Winkel ($\alpha$) von vorzugsweise −45° zu einer Erzeugenden der Welle in der mittleren Zone abgelenkt wird, daß die axiale Länge der beiden äußeren Zonen im wesentlichen halb so groß ist wie die der mittleren Zone, daß die Erregung durch drei in Reihe geschaltete separate Spulen erfolgt, von denen jede außen um eine ringförmige Zone angeordnet ist, daß die äußeren Erregerspulen (10, 14) im wesentlichen halb so viele Windungen haben wie die mittlere Erregerspule und daß konzentrisch zu jeder Erregerspule eine Meßspule vorhanden ist, wobei die äußeren Meßspulen (9, 13) im wesentlichen halb so viele Windungen wie die mittlere Meßspule (11) haben und die letztgenannte Spule gegensinnig mit den äußeren Meßspulen verbunden ist.

2. Magnetoelastischer Drehmomentmeßgeber nach Anspruch 1, **dadurch gekennzeichnet**, daß die drei Erregerspulen durch eine Erregerspule ersetzt sind, die gleichmäßig über alle drei Zonen gewickelt ist.

3. Magnetoelastischer Drehmomentmeßgeber nach Anspruch 1, **dadurch gekennzeichnet**, daß die mittlere Erregerspule durch zwei identische Erregerspulen (12a, 12b) ersetzt ist, von denen jede halb so viele Windungen hat wie die mittlere Erregerspule und die so zusammengeschaltet sind, daß der magnetische Fluß in jeder in entgegengesetzter Richtung zu dem magnetische Fluß in der anderen Spule verläuft, daß die äußeren Erregerspulen derart geschaltet sind, daß ihr magnetischen Flüsse mit dem magnetischen Fluß der benachbarten mittleren Erregerspule zusammenarbeiten, und daß die mittlere Meßspule ebenfalls durch zwei identische Meßspulen (11a, 11b) ersetzt ist, von denen jede halb so viele Windungen wie die mittlere Meßspule hat, wobei jede gegensinnig mit der benachbarten äußeren Meßspule zusammengeschaltet ist, so daß die Meßspulen derart gegensinnig zusammengeschaltet sind, daß das resultierende Drehmoment gemessen werden kann.

4. Magnetoelastischer Drehmomentmeßgeber nach einem der vorhergehenden Ansprüche, **dadurch gekennzeichnet**, daß die Windungszahl der mittleren Erregerspule kleiner ist als Zweifache der Windungszahl der äußeren Erregerspulen.

5. Magnetoelastischer Drehmomentmeßgeber nach einem der vorhergehenden Ansprüche, **dadurch gekennzeichnet**, daß die Windungszahl der mittleren Meßspule kleiner ist als Zweifache der Windungszahl der äußeren Meßspule.

6. Magnetoelastischer Drehmomentmeßgeber nach einem der vorhergehenden Ansprüche, **dadurch gekennzeichnet**, daß der Meßgeber in den Zwischenräumen zwischen den Spulen mit kreisförmigen Scheiben aus magnetischem Material versehen ist.

## Revendications

1. Transducteur de couple magnétoélastique comprenant un arbre, des bobines fixes, concentriques par rapport à l'arbre, ayant pour but d'exciter le champ magnétique du transducteur au moyen d'un courant alternatif, et des bobines fixes, concentriques par rapport à l'arbre, ayant pour but de mesurer le moment de torsion externe qui est appliqué à l'arbre, et une enveloppe magnétique également placée en position concentrique par rapport à l'arbre, **caractérisé** en ce que l'arbre comporte trois zones annulaires parallèles (3, 4, 5) ayant une anisotropie telle que le champ magnétique dans l'arbre est dévié d'un angle α, de préférence égal à 45°, par rapport à une génératrice de l'arbre, dans les deux zones extérieures (3, 5), et il est dévié d'un angle α, de préférence égal à −45°, par rapport à une génératrice de l'arbre, dans la zone centrale, l'étendue axiale des deux zones extérieures étant pratiquement égale à la moitié de celle de la zone intermédiaire, en ce que l'excitation est produite par trois bobines séparées, connectées en série, chaque bobine se trouvant à l'extérieur d'une zone annulaire, et les bobines d'excitation extérieures (10, 14) étant bobinées avec un nombre de spires pratiquement égal à la moitié du nombre de spires de la moitié d'excitation centrale, et en ce qu'une bobine de mesure est montée en position cencentrique par rapport à chaque bobine d'excitation, les bobines de mesure extérieures (9, 3) étant bobinées avec un nombre de spires pratiquement égal à la moitié du nombre de spires de la bobine de mesure centrale (11), cette dernière étant connectée de façon inverse par rapport aux bobines de mesure extérieures.

2. Transducteur de couple magnétoélastique selon la revendication 1, **caractérisé** en ce que les trois bobines d'excitation sont remplacées par une seule bobine d'excitation qui est enroulée uniformément sur l'étendue de l'ensemble des trois zones.

3. Transducteur de couple magnétoélastique selon la revendication 1, **caractérisé** en ce que la bobine d'excitation centrale est remplacée par deux bobines d'excitation identiques (12a, 12b), ayant chacune un nombre de spires égal à la moitié du nombre de spires de la bobine d'excitation centrale, et connectées ensemble de façon que le flux magnétique dans chacune d'elles soit dirigé dans la direction opposée à celle de l'autre, et en ce que les bobines d'excitation extérieures sont connectées de façon que leurs flux magnétiques coopèrent avec le flux magnétique de la bobine d'excitation centrale adjacente, et en ce que la bobine de mesure centrale est également remplacée par deux bobines de mesure identiques (11a, 11b), chacune d'elles ayant un nombre de spires égal à la moitié du nombre de spires de la bobine de mesure centrale, chacune d'elles étant connectée de façon inverse à la bobine de mesure extérieure adjacente, et les bobines de mesure étant ainsi connectées de façon inverse, pour permettre de mesurer le couple résultant.

4. Transducteur de couple magnétoélastique selon l'une quelconque des revendications précédentes, **caractérisé** en ce que le nombre de spires de la bobine d'excitation centrale est inférieur au double du nombre de spires des bobines d'excitation extérieures.

5. Transducteur de couple magnétoélastique selon l'une quelconque des revendications précédentes, **caractérisé** en ce que le nombre de spires de la bobine de mesure centrale est inférieur au double du nombre de spires des bobines de mesure extérieures.

6. Transducteur de couple magnétoélastique selon l'une quelconque des revendications précédentes, **caractérisé** en ce que le transducteur comporte des disques circulaires de matériau magnétique dans l'espace entre les bobines.

Temp °C

FIG. 1A

m
Length of axle

Axle

FIG. 1B

Coils
N      N

Δ-Zero
signal      V

FIG. 1C.

m

Σ-Zero
signal      V

FIG. 1D

m

Temp °C

FIG. 2A

m
Length of axle

Axle

FIG. 2B

Coils
N      2N      N

Δ-Zero
signal      V

FIG. 2C

m

Σ-Zero
signal      V

FIG. 2D

m

**FIG.3**

**FIG.4**

**FIG.5**